# EUROPEAN PATENT APPLICATION

(11) **EP 2 267 341 A2**
(43) Date of publication of application: **29.12.2010**
(21) Application number: 10382175.7
(22) Date of filing: 16.06.2010
(51) Int. Cl.: F16J 15/32, F16J 15/54

(54) **Sealed bearing**

(30) Priority: 18.06.2009 ES 200930330
(71) Applicant: Comercial de Utiles y Moldes, S.A., 08960 Sant Just Desvern, Barcelona (ES)
(72) Inventor: Navarra Pruna, Alberto, 08960, SANT JUST DESVERN (Barcelona) (ES)
(74) Representative: Carpintero Lopez, Francisco

(57) **Abstract**

The invention relates to a sealed bearing which comprises a body (1) with a general cylindrical configuration for its assembly in the housing of a mold or support body (M), and has a cylindrical inner hole (3) for the assembly and balancing of the tight movement of a rotary shaft or core pin (N) provided with internal cooling. The body (1) has: an inner channel (11) for the assembly of a dual-effect rotary seal (7) activated by a first O-ring seal (8); an outer channel (12) for the assembly of a second O-ring seal (8) for the static sealing of the bearing in the housing of a mold or support part (M); and, at one of its ends, a head (5) with peripheral planes (6) and threaded holes (2) for its grip and extraction from the housing of the mold or support part (M).

## Description

### Object of the Invention

The present invention relates to a sealed bearing acting simultaneously as a bearing and as a rotary seal.

This sealed bearing is applicable in the rotary shafts, cores or core pins provided with internal cooling; especially in the core pins of injection molds with automatic unscrewing systems and generally in any rotating core pin, core or shaft with internal cooling.

### Background of the Invention

In different fields of the industry, among others in the field of injection molds, rotary shafts or core pins provided with internal cooling have been used.

In these cases the shafts or core pins require at least two bearings or ball bearings for their correct assembly and alignment on the corresponding mold or support part, and incorporate rotary elements of very diverse balanced and unbalanced models, with right hand and right and left hand rotations, for the connection of the cooling channels defined in the mold or support part with the inner cooling conduit or conduits defined in the rotary shaft or core pin, allowing the internal cooling thereof in rotation.

The mentioned known rotary elements are of the type of specific mechanisms designed for that purpose or of the type of generic rotary seals on the market.

In the first case, although they allow the cooling of the rotating shaft or core pin, they do not allow accumulating pressure inside the cooling channels of the shaft or core pin, which makes their connection in series with the successive rotary shafts or core pins impossible. This forces the constructing workshop to make individualized cooling channels for each shaft or core pin in the mold or support part, with the consequent constructive complexity due to the space that this requires, and the increase in manufacturing costs; in the second case, although it allows accumulating pressure inside the cooling channels, it must be connected individually by means of flexible tubes outside the mold, also considerably increasing the dimensions of the mold.

Another drawback of the mentioned rotary elements is that they are mechanical closures, not balanced by any internal mechanism, the use of the mentioned bearings or ball bearings for the correct assembly of the rotary shaft or core pin in the mold or support part being inevitable.

In these known devices, the dynamic sealing with the rotating shaft depends on the pressure exerted between one of the ends of the rotating shaft and the fixed part of the mechanical closure.

### Description of the Invention

The sealed bearing object of the invention has particularities aimed at providing it with a dual functionality, as a bearing and as a rotary seal simultaneously, at allowing the accumulation of pressure in the cooling channels of the internally cooled core pins or shafts, therefore allowing the series connection thereof in the mold or support part, considerably reducing the space necessary for the implementation of the assembly in the mold or support part and reducing to one the bearings necessary for the correct guiding of the rotating shaft or core pin.

Another objective of the invention is to provide a balancing to the rotating shaft or core pin and to provide the correct and optimized assembly of a rotary seal design of those existing on the market which allows an operation with pressure, necessary to be able to connect in series an undetermined number of core pins or shafts to a cooling channel.

The sealed bearing object of the invention is of the type of those comprising a body with a general cylindrical configuration for the assembly thereof in the housing of a mold or support body, and having an inner hole for the tight assembly of a rotary shaft or core pin.

According to the invention, the bearing body comprises in the inner hole a rotary seal of those existing on the market with a dual effect, activated by a first O-ring seal and forming a sealed inner closure against the rotary shaft or core pin; said bearing body additionally comprising, in its outer surface, a second O-ring seal forming a sealed outer closure against the assembly housing defined in the mold or support part; the sealed bearing enabling the internal cooling of the rotating shaft or core pin with the accumulation of internal pressure and said sealed bearing acting simultaneously as a rotary seal and as an actual bearing.

The design and material of the rotary seal, forming a sealing element for carrying a fluid between a rotating part, in this case the shaft or core pin, and a fixed mold or support part, depend in any case on the working temperature and pressure, on the type of fluid to be used in the internal cooling of the rotary shaft or core pin, and on the rotational speed.

The mentioned dual-effect rotary seal with high wear resistance, activated by a first O-ring seal, provides low friction and minimizes abrupt movement, being inserted in a main body defined as a support of the shaft which stabilizes the rotation of the shaft or core pin inside the bearing body, guiding and balancing said rotation.

The capacity for sliding, support and guiding the rotary movement of the shaft on the bearing body makes the mentioned body an actual bearing. This bearing body is preferably formed from low-friction bronze or from any other type of material with a good performance against sliding and is not oxidized by water.

The invention thus has the advantage of perfectly guiding the shaft in rotational movement, making it unnecessary to implement a second bearing or ball bearing, necessarily used in current applications.

In an embodiment of the invention, the inner hole of the bearing body has at one of its ends a lead-in bevel, intended to facilitate the assembly of the shaft or core pin in the bearing body.

The bearing body has in the surface defined by the inner hole a channel for the superimposed assembly of the first O-ring seal and of the rotary seal and, in its cylindrical outer surface, a channel for the assembly of the second O-ring seal.

The mentioned bearing body is prolonged at one of its ends in a considerably cylindrical head, with a diameter greater than that of said bearing body and having in its contour planes, preferably in a hexagonal arrangement, which prevent the rotation thereof on the housing of the mold or support part even when there is a possible machining error of the housing by the constructing workshop.

The bearing body is provided at the upper part with threaded holes for facilitating its grip and extraction from the housing of the mold or support part.

The assembly described above allows achieving the functionality sought by the invention.

### Description of the Drawings

To complement the description which is being made and for the purpose of aiding to better understand the features of the invention set forth, the figures detailed below are attached as an integral part of said description with an illustrative and non-limiting character:

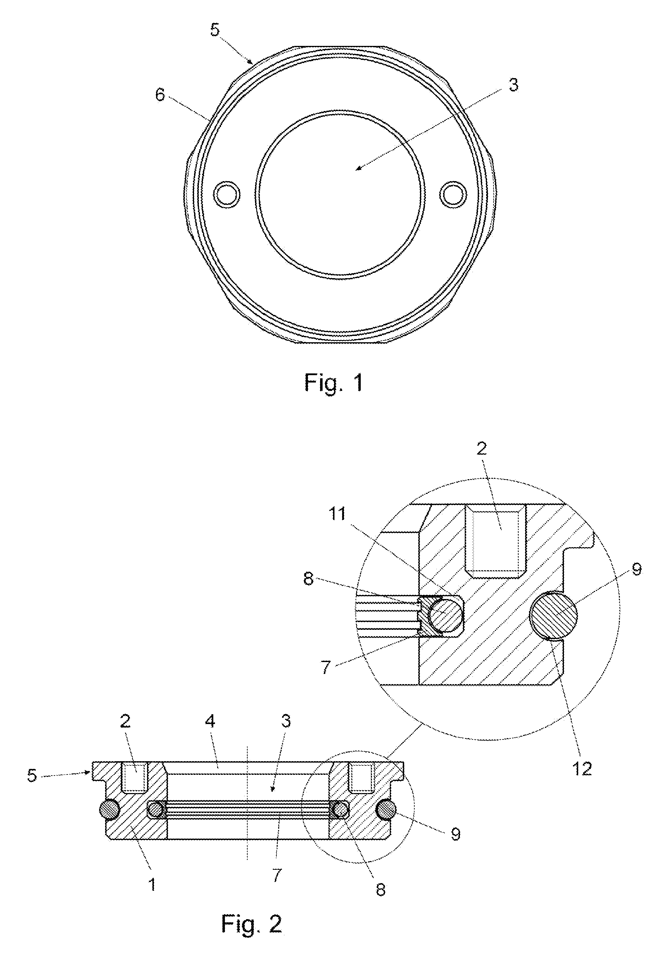

- Figure 1 shows a plan view of an embodiment of the sealed bearing object of the invention.
- Figure 2 shows an elevational view of the sealed bearing of the previous figure sectioned through a vertical plane, and an enlarged detail of the assembly areas of the seals.

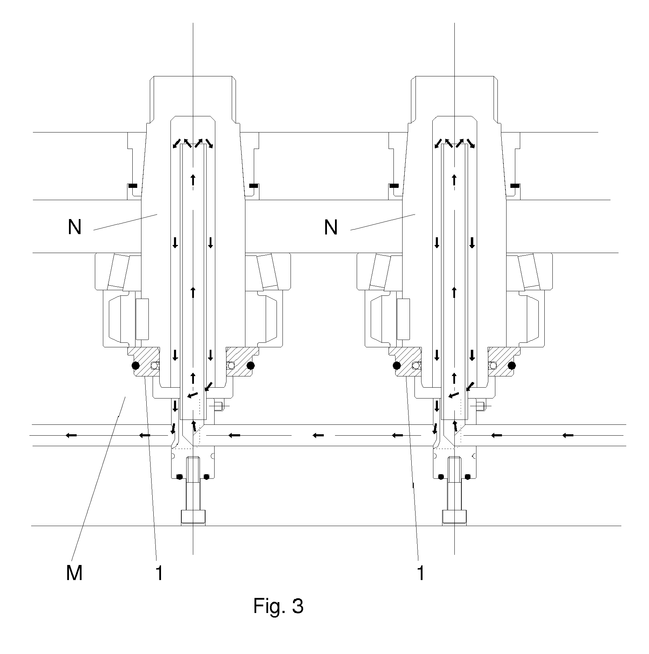

- Figure 3 shows a schematic view of two rotary core pins of an injection mold assembled in respective housings of the mold by means of the respective sealed bearings of the invention.

### Preferred Embodiment of the Invention

In the embodiment shown in the attached figures, the bearing comprises a body (1) with a general cylindrical configuration for its assembly in the housing of a mold or support body (M), and having a cylindrical inner hole (3) for the tight assembly of a rotary shaft or core pin (N) provided with internal cooling.

The body (1) has at one of its ends two threaded holes (2) for facilitating its grip and extraction from the housing of the mold or support part (M).

The cylindrical inner hole (3) has a lead-in bevel (4), and is machined with precision and finish to act as a bearing of the rotary shaft or core pin (N).

Said body (1) is prolonged at one of its ends in a cylindrical head (5), with a diameter greater than that of the actual body (1), having in its periphery planes (6) for preventing the rotation of the body (1) on the housing of the mold or support part (M).

The body (1) comprises in the inner hole (3) a dual-effect rotary seal (7), activated by a first O-ring seal (8), forming a sealed inner closure against the rotary shaft or core pin (N). Said body (1) comprises in its outer surface a second O-ring seal (9) forming a sealed outer closure against the housing of the mold or support part (M).

The body (1) has in the inner hole (3) and in the outer surface respective perimetric channels (11, 12) for the stable assembly of the aforementioned seals (7, 8 and 9).

The combination of the body (1) with the mentioned seals (7, 8, 9) determines that the sealed bearing of the invention acts simultaneously as a bearing and as a sealing element between a shaft or core pin (N) and the support part or mold (M).

Having sufficiently described the nature of the invention as well as a preferred embodiment, it is stated for the relevant purposes that the materials, shape, size and arrangement of the described elements may be modified, provided that this does not entail an alteration of the essential features of the invention which are claimed below.

## Claims

1. Sealed bearing, of the type comprising a body (1) with a general cylindrical configuration for its assembly in the housing of a mold or support body (M), and having a cylindrical inner hole (3) for the assembly and balancing of the tight movement of a rotary shaft or core pin (N) provided with internal cooling; **characterized in that** the body (1) comprises in the inner hole a dual-effect rotary seal (7) activated by a first O-ring seal (8) and forming a sealed inner closure against the rotary shaft or core pin (N); and **in that** said body (1) comprises in its outer surface a second O-ring seal (9) for the static sealing of the bearing in the housing of a mold or support part (M); the sealed bearing enabling the internal cooling of the rotating shaft or core pin (N) with the accumulation of internal pressure and the sealed bearing acting simultaneously as a rotary seal and as an actual bearing for a perfect balancing of the rotational movement of the shaft or core pin.

2. Sealed bearing according to claim 1, **characterized in that** the body (1) has in the surface defined by the inner hole (3) a channel (11) for the superimposed assembly of the first O-ring seal (8) and of the rotary seal (7).

3. Sealed bearing according to any of the previous claims, **characterized in that** the body (1) has in its cylindrical outer surface a channel (12) for the assembly of the second O-ring seal (8).

4. Sealed bearing according to any of the previous claims, **characterized in that** the body (1) is prolonged at one of its ends in a considerably cylindrical head (5), with a diameter greater than the body (1) and peripherally having planes (6) intended to prevent the rotation of the bearing with respect to the assembly housing defined in the mold or support part (M) and the loss of functionality in the balancing of the rotational movement of the shaft or core pin (N).

5. Sealed bearing according to any of the previous claims, **characterized in that** the body (1) has in the end corresponding to the head (5) threaded holes (2) for its grip and extraction from the housing of the mold or support part (M).
